# EUROPÄISCHE PATENTSCHRIFT

(11) **EP 2 789 044 B1**
(45) Veröffentlichungstag und Bekanntmachung des Hinweises auf die Patenterteilung: **09.09.2015**
(21) Anmeldenummer: 12797711.4
(22) Anmeldetag: 29.11.2012
(51) Int. Cl.: H01M 10/42, H01M 10/54, H01M 2/20

(54) **VERFAHREN ZUM BETREIBEN EINER BATTERIE**
METHOD FOR OPERATING A BATTERY
PROCÉDÉ PERMETTANT DE FAIRE FONCTIONNER UNE BATTERIE

(30) Priorität: 05.12.2011 DE 102011120233
(43) Veröffentlichungstag der Anmeldung: 15.10.2014
(73) Patentinhaber: Audi AG, 85045 Ingolstadt (DE)
(72) Erfinder: FEES, Heiner, 74321 Bietigheim-Bissingen (DE); HINTERBERGER, Michael, 85055 Ingolstadt (DE); SCHMIDT, Jörg, 85057 Ingolstadt (DE); TRACK, Andreas, 74343 Sachsenheim (DE); MAISCH, Ralf, 74232 Abstatt (DE)
(74) Vertreter: Herbst, Matthias Heinz
(86) Internationale Anmeldenummer: PCT/EP2012/004930
(87) Internationale Veröffentlichungsnummer: WO 2013/083252

(56) Entgegenhaltungen:
- EP-A1- 1 109 237
- EP-A2- 1 786 057
- WO-A1-2008/034560
- VILAYANUR V VISWANATHAN ET AL: "Second Use of Transportation Batteries: Maximizing the Value of Batteries for Transportation and Grid Services", IEEE TRANSACTIONS ON VEHICULAR TECHNOLOGY, IEEE SERVICE CENTER, PISCATAWAY, NJ, US, Bd. 60, Nr. 7, 1. September 2011 (2011-09-01), Seiten 2963-2970, XP011359733, ISSN: 0018-9545, DOI: 10.1109/TVT.2011.2160378

## Beschreibung

Die Erfindung betrifft ein Verfahren zum Betreiben einer Batterie mit einer Mehrzahl von Batteriezellen nach Anspruch 1, bei welchem die elektrische Energie der Batterie für einen elektrischen Antrieb eines Fahrzeugs genutzt wird, welcher Antriebsenergie für die Fortbewegung des Fahrzeugs bereitstellt. Ein Energiespeichervermögen der Batterie wird ermittelt, und wenn das Energiespeichervermögen der Batterie einen vorbestimmten Schwellenwert erreicht hat, wird die Batterie aus dem Fahrzeug entnommen.

Aus dem Stand der Technik ist es bekannt, die Batteriezellen von Batterien aus Elektrofahrzeugen oder Hybridfahrzeugen dann zu ersetzen, wenn ihr Energiespeichervermögen unter einen definierten Grenzwert absinkt. Üblicherweise wird die Batterie dann zerlegt, um die Batteriezellen weiterverwenden zu können. In diesem zweiten Produktlebenslauf kommen die Batteriezellen dann aufgrund ihres verringerten Energiespeichervermögens nicht mehr in einem Fahrzeug zum Einsatz. Alternativ können die Batterien geschreddert werden, um die bei der Herstellung der Batterie verwendeten Rohstoffe zu gewinnen.

Als nachteilig ist hierbei der Umstand anzusehen, dass derartige Formen der Verwertung von Batterien oder Batteriezellen einen vergleichsweise hohen Aufwand mit sich bringen.

Des Weiteren beschreibt die DE 10 2009 041 070 A1 eine Wiederverwendung von Lithium-Ionen-Batteriezellen, bei welchem der Elektrolyt einer Batteriezelle, die an Leistungsfähigkeit eingebüßt hat, durch einen frischen, unverbrauchten Elektrolyten ersetzt wird. So lässt sich die Einsatzdauer einer Lithium-Ionen-Batteriezellen aufweisenden Batterie verlängern.

Gemäß der DE 10 2010 048 320 A1 wird gebrauchtes Flüssigelektrodenmaterial einer Lithium-Ionen-Batterie aus dieser entfernt und durch ein unverbrauchtes Flüssigelektrodenmaterial ersetzt, um die Eigenschaften der Lithium-lonen-Batterie zu verbessern.

Aufgabe der vorliegenden Erfindung ist es, ein Verfahren der eingangs genannten Art zu schaffen, welches bzw. welche eine besonders aufwandsarme Verwertung der Batterie ermöglicht.

Diese Aufgabe wird durch ein Verfahren mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Das erfindungsgemäße Verfahren zum Betreiben einer Batterie, welche eine Mehrzahl von Batteriezellen aufweist, umfasst folgende Schritte:
a) Nutzen der elektrischen Energie der Batterie für einen elektrischen Antrieb eines Fahrzeugs, welcher Antriebsenergie für die Fortbewegung des Fahrzeugs bereitstellt,
b) Ermitteln eines Energiespeichervermögens der Batterie,
c) Entnehmen der Batterie aus dem Fahrzeug, wenn das Energiespeichervermögen der Batterie einen vorbestimmten Schwellenwert erreicht hat, und
d) Ändern einer elektrischen Verschaltung von Polen der Batteriezellen.

Die Batterie braucht so nicht komplett, also bis zu den einzelnen Batteriezellen zerlegt zu werden, um diese einer weiteren Verwertung zuzuführen. Vielmehr können die Batteriezellen der Batterie in derjenigen physischen Anordnung verbleiben, in welcher sie sich beim Entnehmen der Batterie aus dem Fahrzeug befinden. Lediglich die elektrische Verschaltung der Batteriezellen wird geändert, sodass sich die elektrischen Eigenschaften der Batterie ändern. Die Batterie ist dann zwar nicht mehr für den Einsatz in demselben oder einem baugleichen Fahrzeug geeignet, jedoch kann sie die an eine andere Anwendung gestellten Anforderungen hinsichtlich der von der Batterie bereitzustellenden Spannung oder dem von der Batterie bereitzustellenden Strom durchaus noch erfüllen.

Es kann also die Batterie nahezu unverändert einem zweiten Produktlebenszyklus zugeführt werden, sodass eine besonders aufwandsarme Verwertungsmöglichkeit gegeben ist.

Die elektrische Verschaltung der Pole der Batteriezellen wird geändert, indem ein Deckelelement der Batterie, welches erste zum elektrischen Verbinden der Pole ausgelegte Verbindungselemente umfasst, durch ein anderes Deckelelement ersetzt wird, welches zweite zum elektrischen Verbinden der Pole ausgelegte Verbindungselemente umfasst. Es braucht also um die geänderte Verschaltung der Pole zu realisieren, lediglich das Deckelelement der Batterie ausgetauscht zu werden, und alle übrigen Komponenten der Batterie können unverändert beibehalten werden. Dadurch, dass die Verbindungselemente, welche auch als Stromschienen oder "Busbars" bezeichnet werden, in das Deckelelement integriert sind, ist deren räumliche Anordnung relativ zueinander im jeweiligen Deckelelement fest vorgegeben. Es lassen sich so einfach und passgenau die gewünschten Pole der Batteriezellen mittels der Verbindungselemente kontaktieren und verschalten.

Bevorzugt werden über eine in das Deckelelement integrierte Steuerungseinrichtung elektrische Größen und/oder eine Temperatur der Batteriezellen erfasst. Dadurch, dass die Steuerungseinrichtung also zusammen mit dem Deckelelement ausgetauscht wird, kann die jeweilige Steuerungseinrichtung im Vorfeld so ausgelegt werden, wie dies für die jeweilige Verschaltung der Pole der Batteriezellen günstig ist. Die Steuerungseinrichtung kann zudem dazu ausgelegt sein, elektrische Größen oder die Temperatur der Batteriezellen zu regeln, und/oder dazu, erfasste Werte zu speichern und/oder zu kommunizieren.

Es kann bei dem zweiten Produktlebenszyklus der Batterie von Bedeutung sein, dass durch die Batterie eine vergleichsweise große Spannung bereitgestellt werden soll, weil die von der Batterie im Betrieb gelieferte Stromstärke eine weniger große Rolle spielt. Hierfür kann gemäß einer weiteren vorteilhaften Ausgestaltung der Erfindung eine elektrische parallele Verschaltung der Pole wenigstens zweier Batteriezellen in eine elektrisch serielle Verschaltung geändert werden.

Wenn hingegen für einen Anwendungszweck die Bereitstellung einer besonders großen Stromstärke wünschenswert ist, so kann gemäß einer alternativen Ausführungsform eine elektrisch serielle Verschaltung der Pole wenigstens zweier Batteriezellen in eine elektrisch parallele Verschaltung geändert werden. Es lässt sich so besonders einfach die Batterie an die Bedürfnisse der jeweiligen Anwendung anpassen.

Von Vorteil ist es weiterhin, wenn die Batterie aus dem Fahrzeug entnommen wird, sobald das Energiespeichervermögen der Batterie 65 % bis 85 % des Energiespeichervermögens beträgt, welches die Batterie zu Beginn der Nutzung im Fahrzeug aufweist. Bei einer derartigen Verringerung des Energiespeichervermögens ist im Hinblick auf die hohen Anforderungen an die Batterie im Fahrzeug deren Verwendung in demselben nicht mehr wünschenswert, während das Energiespeichervermögen für weitere Anwendungen durchaus ausreichend ist.

Hierbei kann das Energiespeichervermögen der Batterie insbesondere nach einem Ladevorgang bestimmt und mit dem Energiespeichervermögen verglichen werden, welches die neuwertige Batterie nach einem Ladevorgang aufweist.

Insbesondere, um während des Nutzens der Batterie für den elektrischen Antrieb des Fahrzeugs eine hohe Leistungsfähigkeit der Batterie sicherzustellen, kann es vorgesehen sein, die Batterie aus dem Fahrzeug zu entnehmen, wenn das Energiespeichervermögen der Batterie 75 % bis 80 % des anfänglichen Energiespeichervermögens beträgt.

Schließlich hat es sich als vorteilhaft gezeigt, wenn die Batterie mit einem von dem elektrischen Antrieb des Fahrzeugs verschiedenen Verbraucher derart gekoppelt wird, dass der Verbraucher mit der elektrischen Energie der Batterie betreibbar ist. Dann kann die Batterie in sinnvoller Weise dafür genutzt werden, den Verbraucher mit elektrischer Energie zu versorgen.

Die Batterie umfasst eine Mehrzahl von Batteriezellen und eine Steuerungseinrichtung, die zum Ermitteln eines Energiespeichervermögens der Batterie ausgelegt ist. Ein Deckelelement der Batterie weist erste Verbindungselemente auf, über welche elektrische Pole der Batteriezellen miteinander verbunden sind. Durch ein in Abhängigkeit von dem ermittelten Energiespeichervermögen vorgenommenes Ersetzen des Deckelelements durch ein anderes Deckelelement, welches zweite zum elektrischen Verbinden der Pole ausgelegte Verbindungselemente umfasst, ist eine elektrische Verschaltung der Pole der Batteriezellen veränderbar. Eine solche Batterie ermöglicht eine aufwandsarme Verwertung, wenn das Energiespeichervermögen der Batterie abgenommen hat. Es braucht nämlich lediglich das Deckelelement durch das andere Deckelelement ersetzt zu werden, um die dann anders verschalteten Batteriezellen einem zweiten Produktlebenszyklus zuzuführen.

Bevorzugt ist das Deckelelement zerstörungsfrei lösbar mit einem Grundkörper der Batterie gekoppelt. Dann kann nämlich das Deckelelement mit besonders geringem Aufwand ausgetauscht und durch das andere Deckelelement ersetzt werden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: einen Deckel für ein Batteriemodul einer Fahrzeugbatterie, bei welchem durch in den Deckel integrierte Stromschienen eine Verschaltung von elektrischen Polen von Batteriezellen der Fahrzeugbatterie realisiert ist, bei welcher jeweils zwei gleichnamige Pole parallel geschaltet und diese Gruppen an parallel geschalteten Batteriezellen elektrisch in Reihe geschaltet sind;
- Fig. 2: stark schematisiert eine Verschaltung, bei welcher jeweils zwei Pole der Batteriezellen elektrisch parallel geschaltet sind; und
- Fig. 3: stark schematisiert eine durch Verwenden eines anderen Deckels erreichbare Verschaltung, bei welcher bei gleicher räumlicher Anordnung der elektrischen Pole der Batteriezellen eine Reihenschaltung der Batteriezellen realisiert ist.

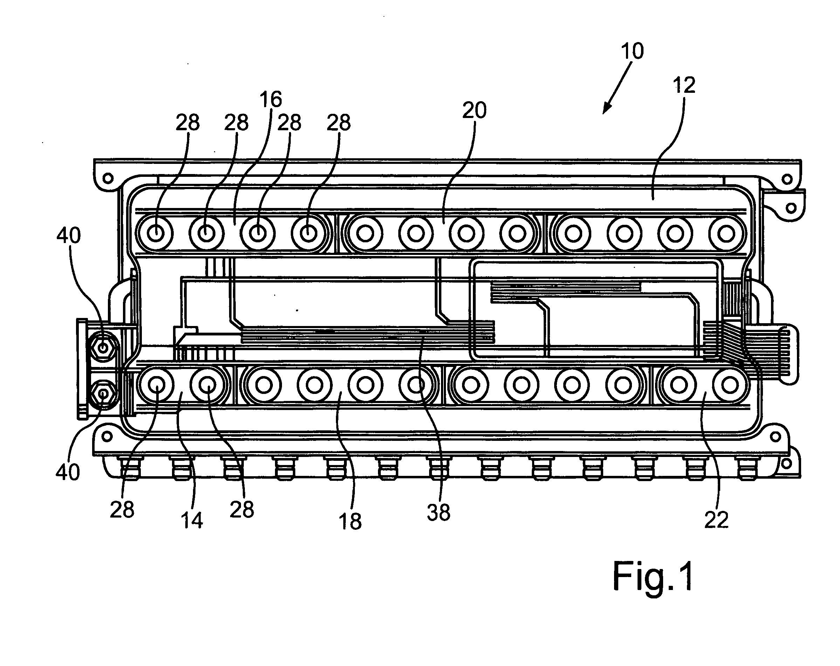

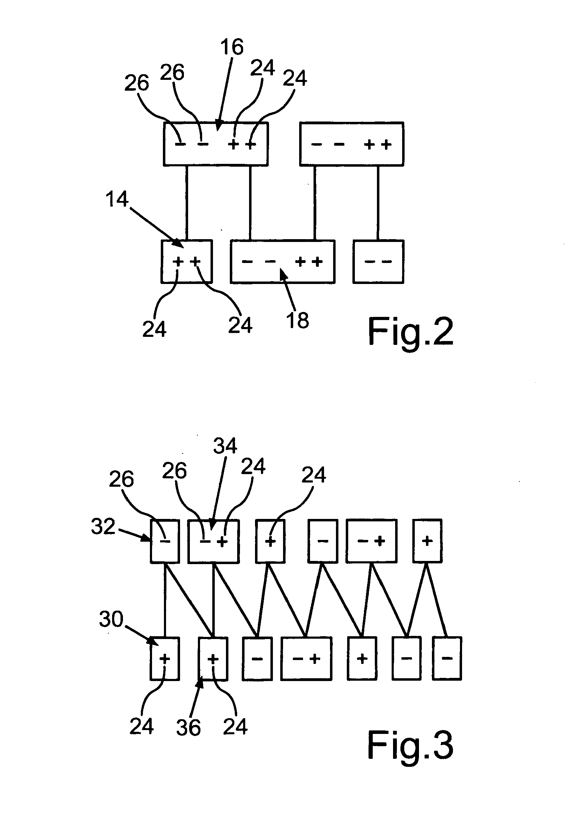

Von einer Fahrzeugbatterie, welche eine Mehrzahl von Batteriezellen aufweist, ist in Fig. 1 ein Deckel 10 gezeigt. In einen aus einem Kunststoff gebildeten Grundkörper 12 des Deckels 10 sind Stromschienen 14, 16, 18, 20, 22 integriert, durch welche elektrische Pole 24, 26 der Batteriezellen (vgl. Fig. 2) elektrisch miteinander verschaltet sind. Wird der Deckel 10 auf ein Gehäuse der (nicht gezeigten) Fahrzeugbatterie aufgesetzt, so kontaktieren Kontaktstellen 28 der Stromschienen 14, 16, 18, 20, 22 die den Kontaktstellen 28 zugeordneten elektrischen Pole 24, 26 der Batteriezellen der Batterie.

Der in Fig. 1 beispielhaft gezeigte Deckel 10 ist für eine Batterie ausgebildet, bei welcher zwölf Batteriezellen derart miteinander verschaltet sind, dass jeweils zwei Batteriezellen parallel und diese Zweiergruppen der parallel geschalteten Batteriezellen elektrisch in Reihe geschaltet sind. Mit einer solchen Schaltung der elektrischen Pole 24, 26 der Batteriezelle lässt sich zwar eine geringere Spannung der Batterie bereitstellen als bei einer durchgängig seriellen Schaltung der Batteriezellen, jedoch kann die Batterie eine höhere Stromstärke liefern.

Im Laufe der Zeit nimmt das Energiespeichervermögen der Batterie ab. So kann es sein, dass die Batterie nach einem Ladevorgang lediglich einen Ladezustand (SOC = state of charge) erreicht, welcher beispielsweise 80% des Ladezustands einer gleichartigen, jedoch neuwertigen Batterie beträgt. Bei einem derartigen Nachlassen des Energiespeichervermögens der Batterie wurde bislang die Batterie zerlegt. Die Batteriezellen wurden dann einer weiteren Verwertung zugeführt, welche geringere Anforderungen an das Energiespeichervermögen der Batteriezellen stellt, als eine Anwendung als Traktionsbatterie für ein Fahrzeug.

Vorliegend wird die Batterie nahezu unverändert wiederverwertet. Es wird nämlich lediglich der Deckel 10 von einem Grundkörper der Batterie abmontiert und durch einen weiteren Deckel ersetzt, durch welchen eine andere Verschaltung der elektrischen Pole 24, 26 der Batteriezellen realisiert ist. Hierfür sind in den weiteren Deckel Stromschienen 30, 32, 34, 36 integriert (vgl. Fig. 3), welche bei physisch gleicher Anordnung der Batteriezellen in der Batterie zu einer anderen elektrischen Verschaltung derselben führen.

Bei dem schematisch in Fig. 3 gezeigten Beispiel einer neuen Verschaltung der Batteriezelle sind diese durchgängig elektrisch in Serie geschaltet. Dadurch kann die Batterie eine vergleichsweise große Spannung bereitstellen, wenn auch bei gegenüber einer Batterie mit dem in Fig. 1 gezeigten Deckel 10 geringerer Stromstärke.

In alternativen Ausführungsformen können auch durch die in den Grundkörper 12 des Deckels 10 integrierten Stromschienen jeweils mehr als zwei Batteriezellen - etwa drei oder fünf Batteriezellen - elektrisch parallel geschaltet und diese Dreiergruppen oder Fünfergruppen elektrisch in Reihe geschaltet werden. Auch kann bei solchen Batterien der in Fig. 1 gezeigte Deckel 10 zum Einsatz kommen, um eine veränderte Verschaltung zu realisieren.

Es braucht also, um die Batterie, deren Energiespeichervermögen nachgelassen hat, einer weiteren Verwendung zuzuführen, die Batterie nicht komplett bis zur Batteriezelle zerlegt zu werden, sondern die Batterie kann nahezu unverändert einem zweiten Produktlebenszyklus zugeführt werden. Lediglich der Deckel 10, durch welchen die Hochvoltverschaltung realisiert ist, wird ausgetauscht. Dies bringt einen besonders geringen Aufwand beim Verwerten der Batterie für andere Zwecke als das Bereitstellen von Antriebsenergie für einen elektrischen Antrieb eines Fahrzeugs mit sich.

Wie aus Fig. 1 ersichtlich ist, sind in den Grundkörper 12 des Deckels 10 auch Leitungen 38 integriert, über welche mittels einer ebenfalls in den Deckel 10 integrierten Steuerungsplatine die Zellspannungen der Batteriezellen erfasst und die Spannungen der Batteriezellen balanciert werden können.

Über Anschlüsse 40 kann die Batterie mit einem elektrischen Verbraucher gekoppelt werden, für welchen sie elektrische Energie bereitstellt.

## Patentansprüche

1. Verfahren zum Betreiben einer Batterie mit einer Mehrzahl von Batteriezellen mit folgenden Schritten:
a) Nutzen der elektrischen Energie der Batterie für einen elektrischen Antrieb eines Fahrzeugs, welcher Antriebsenergie für die Fortbewegung des Fahrzeugs bereitstellt,
b) Ermitteln eines Energiespeichervermögens der Batterie,
c) Entnehmen der Batterie aus dem Fahrzeug, wenn das Energiespeichervermögen der Batterie einen vorbestimmten Schwellenwert erreicht hat, und
d) Ändern einer elektrischen Verschaltung von Polen (24, 26) der Batteriezellen,
**dadurch gekennzeichnet, dass**
die elektrische Verschaltung der Pole (24, 26) der Batteriezellen geändert wird, indem ein Deckelelement (10) der Batterie, welches erste zum elektrischen Verbinden der Pole ausgelegte Verbindungselemente (14, 16, 18) umfasst, durch ein anderes Deckelelement ersetzt wird, welches zweite zum elektrischen Verbinden der Pole (24, 26) ausgelegte Verbindungselemente (30, 32, 34, 36) umfasst.

2. Verfahren nach Anspruch 1,
**dadurch gekennzeichnet, dass**
über eine in das Deckelelement (10) integrierte Steuerungseinrichtung elektrische Größen und/oder eine Temperatur der Batteriezellen erfasst und/oder geregelt werden.

3. Verfahren nach Anspruch 1 oder 2,
**dadurch gekennzeichnet, dass**
eine elektrisch parallele Verschaltung der Pole (24, 26) wenigstens zweier Batteriezellen in eine elektrisch serielle Verschaltung oder eine elektrisch serielle Verschaltung der Pole (24, 26) wenigstens zweier Batteriezellen in eine elektrisch parallele Verschaltung geändert wird.

4. Verfahren nach einem der Ansprüche 1 bis 3,
**dadurch gekennzeichnet, dass**
die Batterie aus dem Fahrzeug entnommen wird, wenn das Energiespeichervermögen der Batterie 65 % bis 85 %, insbesondere 75 % bis 80 %, des Energiespeichervermögens beträgt, welches die Batterie zu Beginn der Nutzung im Fahrzeug aufweist.

5. Verfahren nach einem der Ansprüche 1 bis 4,
**dadurch gekennzeichnet, dass**
die Batterie mit einem von dem elektrischen Antrieb des Fahrzeugs verschiedenen Verbraucher derart gekoppelt wird, dass der Verbraucher mit der elektrischen Energie der Batterie betreibbar ist.

## Claims

1. Method for operating a battery having a plurality of batter cells, comprising the steps of:
a) using the electrical energy from the battery for an electric drive in a vehicle which provides drive energy in order to move the vehicle,
b) determining the battery energy storage capacity,
c) removing the battery from the vehicle when the battery energy storage capacity has reached a predetermined threshold value,
d) changing an electrical wiring of poles (24, 26) of the battery cells,
**characterised in that**
the electrical wiring of the poles (24, 26) of the battery cells is changed by a cover element (10) for the battery, which comprises first connecting elements (14, 16, 18) designed to electrically connect the poles, being replaced by another cover element which comprises second connecting elements (30, 32, 34, 36) designed to electrically connect the poles (24, 26).

2. Method according to claim 1, **characterised in that** electrical variables and/or a temperature of the battery cells is recorded and/or controlled by a control device integrated in the cover element (10).

3. Method according to either claim 1 or claim 2, **characterised in that** an electrically parallel wiring of the poles (24, 26) of at least two battery cells is changed to an electrically serial wiring, or an electrically serial wiring of the poles (24, 26) of at least two battery cells, is changed to an electrically parallel wiring.

4. Method according to any of claims 1 to 3, **characterised in that** the battery is removed from the vehicle when the battery energy storage capacity is from 65 % to 85 %, in particular from 75 % to 80 %, of the energy storage capacity of the battery when it is first installed in the vehicle.

5. Method according to any of claims 1 to 4, **characterised in that** the battery is coupled to a consumer other than the electric drive of the vehicle in such a way that the consumer can be operated using the electrical energy from the battery.

## Revendications

1. Procédé de fonctionnement d'une batterie comportant une pluralité d'éléments de batterie, comprenant les étapes consistant à :
a) utiliser l'énergie électrique de la batterie pour la commande électrique d'un véhicule, laquelle énergie de commande est disponible pour l'avancement du véhicule,
b) déterminer la capacité de stockage d'énergie de la batterie,
c) retirer la batterie du véhicule lorsque la capacité de stockage d'énergie de la batterie a atteint une valeur de seuil prédéterminée et
d) modifier le câblage électrique des pôles (24, 26) des éléments de batterie,
**caractérisé en ce que** :
le câblage électrique des pôles (24, 26) des éléments de batterie est modifié en remplaçant un élément de couvercle (10) de la batterie, qui comprend des premiers éléments de connexion (14, 16, 18) conçus pour la connexion électrique des pôles, par un autre élément de couvercle, qui comprend des seconds éléments de batterie (30, 32, 34, 36) conçus pour la connexion électrique des pôles (24, 26).

2. Procédé selon la revendication 1,
**caractérisé en ce que** :
des grandeurs électriques et/ou la température des éléments de batterie sont détectés et/ou réglés via un dispositif de commande intégré à l'élément de couvercle (10).

3. Procédé selon la revendication 1 ou la revendication 2,
**caractérisé en ce que** :
un câblage électrique en parallèle des pôles (24, 26) d'au moins deux éléments de batterie est modifié en câblage électrique en série ou un câblage électrique en série des pôles (24, 26) d'au moins deux éléments de batterie est modifié en câblage électrique en parallèle.

4. Procédé selon l'une quelconque des revendications 1 à 3,
**caractérisé en ce que** :
la batterie est retirée du véhicule lorsque la capacité de stockage d'énergie atteint 65 à 85 %, en particulier 75 à 80 %, de la capacité de stockage d'énergie, que présente la batterie au départ de son utilisation dans le véhicule.

5. Procédé selon l'une quelconque des revendications 1 à 4,
**caractérisé en ce que** :
la batterie est couplée à un consommateur différent de la commande électrique du véhicule de sorte que le consommateur puisse être alimenté par l'énergie électrique de la batterie.
